# EUROPÄISCHE PATENTSCHRIFT

(11) **EP 1 029 815 B1**
(45) Veröffentlichungstag und Bekanntmachung des Hinweises auf die Patenterteilung: **07.04.2004**
(21) Anmeldenummer: 00810078.6
(22) Anmeldetag: 28.01.2000
(51) Int. Cl.: B65G 23/32

(54) **Kraftübertragungs- oder Transportvorrichtung**
Transport or power transmission device
Dispositif de transport ou de transmission de force

(30) Priorität: 16.02.1999 CH 29099
(43) Veröffentlichungstag der Anmeldung: 23.08.2000
(73) Patentinhaber: Ferag AG, 8340 Hinwil (CH)
(72) Erfinder: Mäder, Carl Conrad, 8340 Hinwil (CH); Schneider, Marcel, 8331 Auslikon (CH)
(74) Vertreter: Frei, Alexandra Sarah

(56) Entgegenhaltungen:
- EP-A- 0 309 702
- WO-A-97/15514
- GB-A- 2 228 910
- US-A- 3 059 489
- US-A- 4 072 228
- US-A- 4 080 841
- US-A- 5 503 264

## Beschreibung

Die Erfindung betrifft eine Kraftübertragungs- oder Transportvorrichtung nach dem Oberbegriff des ersten unabhängigen Patentanspruchs. Die Vorrichtung weist als Kraftübertragungsmittel eine Reihe von kraftübertragenden Elementen, Führungsmittel zur Führung der kraftübertragenden Elemente entlang einer vorgegebenen Bahn und mindestens einen Antrieb auf, wobei der Antrieb örtlich auf kraftübertragende Elemente wirkt und diese im Antriebsbereich auf der vorgegebenen Bahn bewegt und wobei die angetriebenen Elemente durch Stossen oder Ziehen weitere Elemente der Reihe bewegen.

Die kraftübertragenden Elemente können miteinander zu einer Kette, z.B. zu einer in sich geschlossenen Kette verbunden sein, wobei die Verbindungen zwischen den Elementen mehr oder weniger Spiel haben. Miteinander verbundene kraftübertragende Elemente können ziehend aufeinander wirken oder, wenn sie geeignete Formen haben und geeignete Führungsmittel vorgesehen werden, auch stossend. Die kraftübertragenden Elemente können aber auch unverbunden sein. Für unverbundene, kraftübertragende Elemente sind in jedem Falle für die ganze vorgegebenen Bahn Führungsmittel (z.B. Führungskanal oder Schienen) vorzusehen und es ist nur eine Kraftübertragung durch Stossen möglich.

Für Transportzwecke sind die kraftübertragenden Elemente mindestens teilweise mit Transportmitteln ausgerüstet oder an solche koppelbar. Die Transportmittel sind beispielsweise Greifer für einzelne Gegenstände oder Ladeflächen oder -behälter, die durch die kraftübertragenden Elemente entlang der vorgegebenen Bahn verschoben werden.

Antriebe für die oben genannten Kraftübertragungsmittel sind beispielsweise Kettenräder, die in die kraftübertragenden Elemente oder zwischen die kraftübertragenden Elemente eingreifen (Formschluss) und diese über ein meist kreisbogenförmiges Wegstück mitnehmen. Auch Antriebe, die die Elemente via Reibschluss antreiben sind möglich.

Besteht das Kraftübertragungsmittel einer Kraftübertragungs- oder Transportvorrichtungen der oben beschriebenen Art aus miteinander verbundenen Elementen und weist es ein nicht vernachlässigbares Spiel zwischen den Elementen auf oder besteht es sogar aus nicht miteinander verbundenen Elementen, haben die Elemente an verschiedenen Stellen der vorgegebenen Bahn je nach Belastung unterschiedliche Abstände voneinander. Auf belasteten Bahnabschnitten (z.B. zwischen einem Antrieb und einem Abtrieb) weisen Reihen von gezogenen Elementen grösste Abstände auf, Reihen von gestossenen Elementen kleinste Abstände. Auf unbelasteten Bahnabschnitten sind die Abstände nicht genau definiert und hängen gegebenenfalls von wechselnden äusseren Umständen ab.

Um derart undefinierte Abstände zwischen kraftübertragenden Elementen zu verhindern, ist es bekannt, in sich geschlossene Kraftübertragungsmittel zu spannen. Zur Spannung von Ketten sind Kettenspanner, beispielsweise in Form von gefedert gelagerten, mit der Kette passiv rotierenden Kettenrädern bekannt oder Kettenkanäle, die in der Längsrichtung elastisch deformierbar sind und die etwas länger konzipiert werden als die darin laufende Kette.

Eine derartige Vorspannung zwischen Kraftübertragungsmittel (Kette) und Führungsmittel (Kettenspanner oder längselastischer Kanal) ist nur möglich für ein Kraftübertragungsmittel, das sich im wesentlichen lückenlos über eine in sich geschlossene, vorbestimmte Bahn erstreckt. Sie ist nicht anwendbar für ein Kraftübertragungsmittel mit zwei Enden, das auf einer vorgegebenen Bahn hin und her bewegt wird, sie ist nicht anwendbar für Reihen von nicht miteinander verbundenen, kraftübertragenden Elementen, die in variierender Zahl auf einer vorgegebenen Bahn bewegt werden, und sie ist nicht anwendbar für eine nur örtliche Vorspannung des Kraftübertragungsmittels.

Die Erfindung stellt sich nun die Aufgabe, eine Kraftübertragungs- oder Transportvorrichtung mit einer Reihe von miteinander verbundenen oder miteinander nicht verbundenen, kraftübertragenden Elementen als Kraftübertragungsmittel, mit mindestens einem örtlich auf kraftübertragende Elemente wirkenden Antrieb und mit Führungsmitteln zur Führung der kraftübertragenden Elemente auf einer vorgegebenen Bahn zu schaffen, wobei die erfindungsgemässe Vorrichtung es möglich machen soll, die Reihe von kraftübertragenden Elementen auf mindestens einem Teilstück der vorgegebenen Bahn zu spannen und dadurch auf diesem Teilstück genau definierte Elementabstände einzustellen. Dies soll insbesondere möglich sein unabhängig davon, ob die Elemente miteinander verbunden sind oder nicht, und unabhängig davon, ob die vorbestimmte Bahn und/oder die Reihe von kraftübertragenden Elementen in sich geschlossen ist oder nicht.

Diese Aufgabe wird gelöst durch die Vorrichtung, wie sie im ersten unabhängigen Anspruch definiert ist.

Die erfindungsgemässe Vorrichtung weist Mittel auf, mit deren Hilfe die Reihe von kraftübertragenden Elementen auf einem vorgegebenen Teilstück der vorgegebenen Bahn durch eine Zug- oder eine Druckspannung gespannt wird, derart, dass sich zwischen verbundenen Elementen der grösste, mögliche Abstand (Zugspannung) oder zwischen verbundenen oder unverbundenen Elementen der kleinste, mögliche Abstand (Druckspannung) einstellt.

Am einen Ende des Teilstückes der vorgegebenen Bahn, auf dem die Reihe von kraftübertragenden Elementen gespannt werden soll, wird ein über eine Reibungskupplung auf kraftübertragende Elemente wirkender Spannantrieb vorgesehen und am anderen Ende des Teilstückes ein weiterer Antrieb oder ein intermittierender Stopp, der im wesentlichen ohne Schlupf auf die Elemente wirkt.

Der Spannantrieb treibt die Elemente mit einer Geschwindigkeit v_{S} an, die von der Antriebsgeschwindigkeit v des weiteren Antriebs oder intermittierenden Stopps (v = 0) verschieden ist, derart, dass Elemente durch den Spannantrieb vom weiteren Antrieb oder Stopp weggezogen (Zugspannung) oder gegen diesen getrieben (Druckspannung) werden. Sobald durch die ziehende oder stossende Wirkung des Spannantriebes in der Elementenreihe zwischen Spannantrieb und weiterem Antrieb eine genügende Spannung erzeugt ist, beginnt die Reibkupplung des Spannantriebes zu rutschen. Die zwischen Spannantrieb und weiterem Antrieb oder Stopp erzeugbare Spannung entspricht dem Reibwiderstand der Reibungskupplung des Spannantriebes.

Der weitere Antrieb oder Stopp wirkt im wesentlichen ohne Schlupf auf kraftübertragende Elemente, das heisst beispielsweise formschlüssig oder reibschlüssig derart, dass ein Rutschen des weiteren Antriebs erst bei bedeutend höheren Kräften auftritt als beim Spannantrieb.

Das Prinzip der erfindungsgemässen Vorrichtung, beispielhafte Ausführungsformen der erfindungsgemässen Vorrichtung sowie Anwendungsbeispiele für die erfindungsgemässe Vorrichtung werden anhand der folgenden Figuren im Detail beschrieben. Dabei zeigen:
- **Figuren 1 und 2**: das Prinzip der erfindungsgemässen Kraftübertragungs- oder Transportvorrichtung, in der im Kraftübertragungsmittel örtlich eine Druckspannung (Figur 1) oder eine Zugspannung (Figur 2) zwischen kraftübertragenden Elementen erzeugbar ist;
- **Figuren 3 und 4**: eine beispielhafte Ausführungsform eines Spannantriebs für eine erfindungsgemässe Vorrichtung als Seitenansicht (Figur 3) und als Draufsicht (Figur 4, Blickrichtung Pfeil IV in Figur 3);
- **Figuren 5 bis 7**: drei beispielhafte Anwendungen der erfindungsgemässen Vorrichtung;
- **Figuren 8 und 9**: eine weitere, beispielhafte Ausführungsform der erfindungsgemässen Vorrichtung als Draufsicht (Figur 9) und als Seitenansicht (Figur 8);
- **Figur 10**: eine beispielhafte Anordnung von kraftübertragendem Element und daran ankoppelbarem Transportmittel im Schnitt senkrecht zur vorgegebenen Bahn zur Illustration einer Anwendung der in der erfindungsgemässen Vorrichtung erstellten definierten Abstände zwischen kraftübertragenden Elementen.

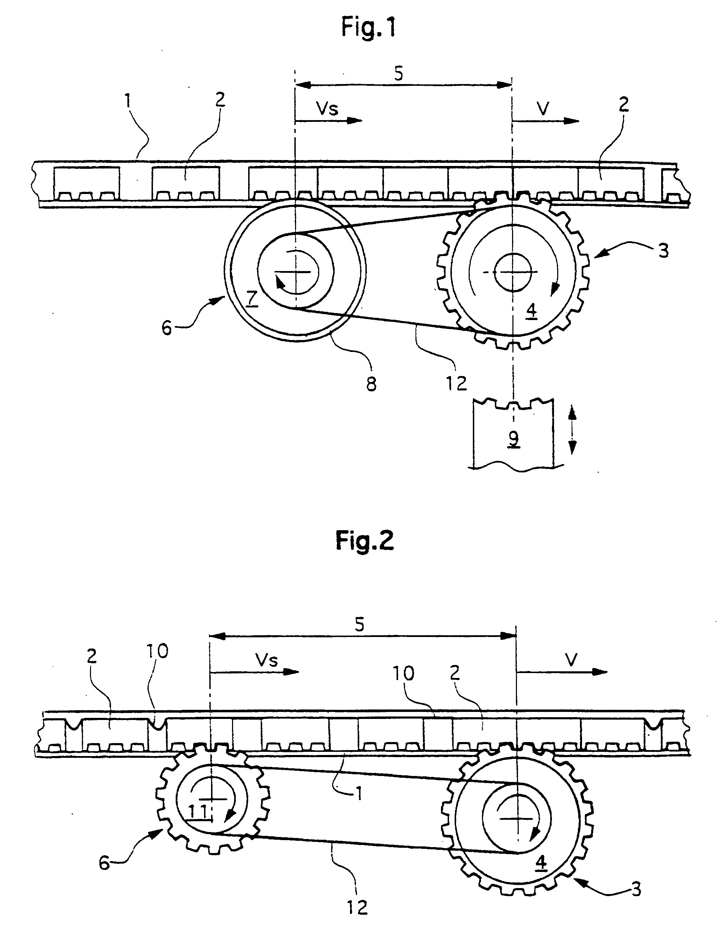

**Figuren 1 und 2** zeigen an sehr schematisch dargestellten Ausschnitten aus beispielhaften Ausführungsformen der erfindungsgemässen Vorrichtung das Funktionsprinzip dieser Vorrichtung.

**Figur 1** zeigt ein Führungsmittel 1 in Form eines Führungskanals oder entsprechender Schienen (durch zwei Linien schematisch dargestellt). Durch das Führungsmittel wird eine vorgegebene Bahn definiert, auf der eine Reihe von kraftübertragenden Elementen 2 (im dargestellten Falle nicht miteinander verbunden) verschiebbar ist. Die kraftübertragenden Elemente 2 weisen auf ihrer einen Seite eine Art Zahnung auf, in die ein Antrieb 3 in Form eines Zahnrades 4 formschlüssig eingreift, wodurch die kraftübertragenden Elemente 2 mit einer Antriebsgeschwindigkeit v im Führungsmittel 1 verschoben werden. Der Antrieb 3 stellt das eine Ende eines Teilstückes 5 der vorgegebenen Bahn dar, auf der in der Reihe der kraftübertragenden Elemente 2 eine Druckspannung erzeugt werden soll.

Am anderen Ende dieses Teilstückes 5 ist ein Spannantrieb 6 angeordnet. Dieser besteht aus einem Spannrad 7, das auf seinem Umfang einen Ring 8 aus einem elastisch deformierbaren Material trägt und das mit nicht dargestellten Mitteln gegen die kraftübertragenden Elemente 2 gedrückt wird. Das Spannrad 7 wird angetrieben über Kupplungsmittel 12 (z.B. Zahnriemen) und durch den Antrieb 3, derart übersetzt, dass die Antriebsgeschwindigkeit v_{S}, mit der das Spannrad 7 die Elemente 2 antreibt, grösser ist als die Antriebsgeschwindigkeit v, mit der der Antrieb 3 die kraftübertragenden Elemente 2 antreibt (resultierende Geschwindigkeit v_{S} - v ist vom Spannantrieb 6 in das Teilstück 5 gerichtet).

Durch den Spannantrieb 6 wird auf dem Teilstück 5 eine Reihe von gegeneinander gedrückten, kraftübertragenden Elementen 2 erstellt und aufrecht erhalten, in welcher Reihe die Abstände zwischen den Elementen die kleinst möglichen und dadurch genau definiert sind. Die Reibkraft zwischen Elementen 2 und Spannrad 7 wird derart eingestellt, dass das Spannrad 7 auf den Elementen 2 rutscht, wenn eine erwünschte Spannung in der Reihe von Elementen 2 zwischen dem Antrieb 3 und dem Spannantrieb 6 erreicht ist.

Es ist keine Bedingung, dass der Spannantrieb 6 vom weiteren Antrieb 3 angetrieben wird, er kann auch beispielsweise einen eigenen Motor aufweisen.

Der Antrieb 3 kann ein kontinuierlicher Antrieb sein (Zahnrad 4 kontinuierlich rotierend) oder er kann die Elemente 2 schrittweise verschieben, das heisst intermittierend antreiben und stoppen. Der Spannantrieb 6 ist vorteilhafterweise in allen Fällen ein kontinuierlicher Antrieb und ist im Falle eines schrittweisen Antriebs 3 nicht mit diesem gekoppelt.

Anstelle des Antriebs 3 kann auch ein intermittierend gegen die Elemente 2 und beispielsweise formschlüssig in die Elemente 2 oder zwischen die Elemente eingreifender Stopp 9 zur Anwendung kommen (Antriebsgeschwindigkeit v = 0), wie er unter dem Antrieb 3 dargestellt ist. Die Elemente 2 werden bei aktivem Stopp 9 (mit den Elementen im Eingriff) durch den Spannantrieb 6 in einer Reihe zwischen Stopp 9 und Spannantrieb 6 gespannt und bei nicht aktivem Stopp 8 (Stopp mit den Elementen nicht im Eingriff) durch den Spannantrieb 6 weitergeschoben.

In der Vorrichtung gemäss Figur 1 wird auf dem Teilstück 5 eine Druckspannung und dadurch ein definierter Abstand zwischen den Elementen erzeugt beispielsweise um einen sauberen Eingriff des Antriebes 3 in die Elemente 2 zu gewährleisten.

Die Vorrichtung gemäss Figur 1 kann auch in einer Richtung betrieben werden, die der dargestellten Richtung der Antriebsgeschwindigkeit v entgegengerichtet ist. Damit in einem solchen Falle zwischen Antrieb 3 und Spannantrieb 6 eine Druckspannung in der Elementenreihe entsteht, ist die Antriebsgeschwindigkeit v_{S} des Spannantriebes 6 kleiner als v oder entgegengesetzt zu v gerichtet (resultierende Geschwindigkeit v_{S} - v vom Spannantrieb 6 in das Teilstück 5 weisend) zu wählen, derart, dass die Elemente durch den Spannantrieb gebremst werden.

**Figur 2** zeigt in einer gleichen Darstellungsweise wie Figur 1 eine Kraftübertragungs- oder Transportvorrichtung, in der über ein Teilstück 5 in einer Reihe von über flexible Verbindungen 10 miteinander verbundenen, kraftübertragenden Elementen 2 eine Zugspannung erzeugt wird. Diese Zugspannung, durch die auf dem Teilstück 5 die maximal möglichen und dadurch genau definierten Abstände zwischen den kraftübertragenden Elementen 2 eingestellt werden, wird erzeugt durch einen Spannantrieb 6 und einen weiteren Antrieb 3, wobei die Antriebsgeschwindigkeit v_{S} des Spannantriebes 6 kleiner ist als die Antriebsgeschwindigkeit v des Antriebs 3 oder gegen diese gerichtet ist (resultierende Geschwindigkeit v_{S} - v vom Spannantrieb 6 vom Teilstück 5 weg weisend). Auch in diesem Falle kann der Antrieb 3 durch einen intermittierenden Stopp ersetzt werden (v = 0).

Auch die Vorrichtung gemäss Figur 2 kann in entgegengesetzter Richtung betrieben werden (v nach links gerichtet), wobei die Antriebsgeschwindigkeit v_{S} grösser zu sein hat als v (resultierende Geschwindigkeit v_{S} - v vom Spannantrieb vom Teilstück 5 weg weisend).

Der Antrieb 3 der Vorrichtung gemäss Figur 2 ist wie in der Figur 1 ein Ketten- oder Zahnrad 4. Auch der Spannantrieb 6 weist hier ein Ketten- oder Zahnrad 11 auf, das formschlüssig in die Kette der Elemente 2 eingreift. Das Kettenrad 11 des Spannantriebs 6 ist aber über Kupplungsmittel 12 mit dem Antrieb 3 gekoppelt welche Kupplungsmittel 12 eine Reibungskupplung (z.B. Kupplungsriemen) darstellen und derart ausgelegt ist, dass die Kupplung zu rutschen beginnt, wenn in der Reihe von kraftübertragenden Elementen eine gewünschte Spannung erzeugt ist.

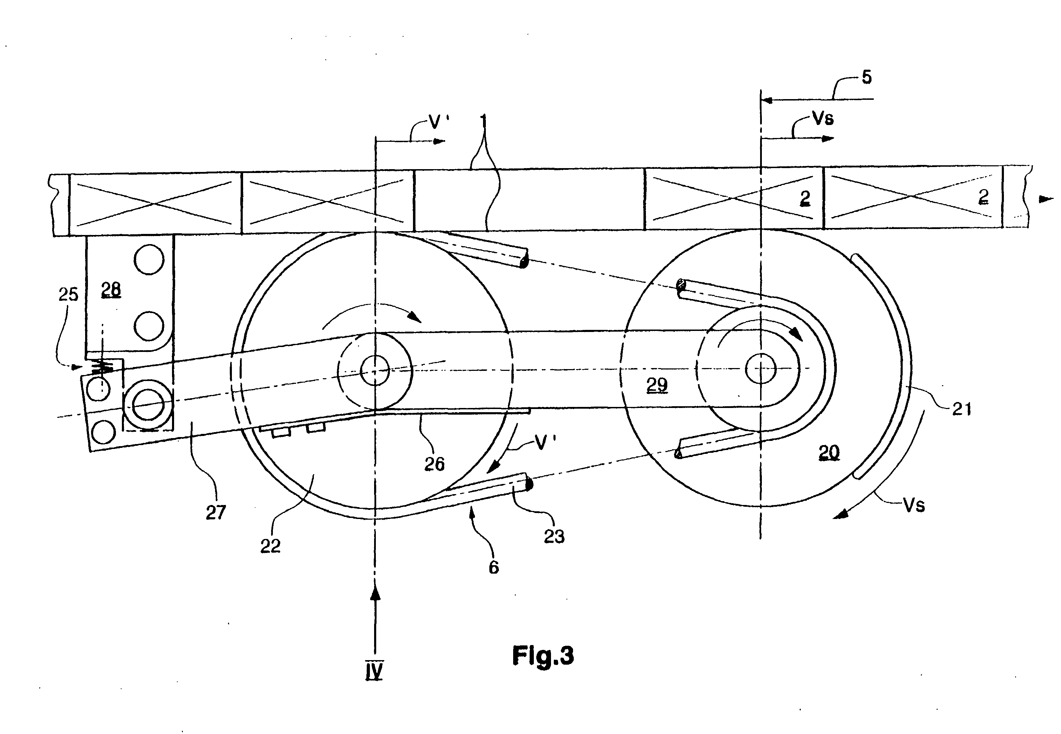

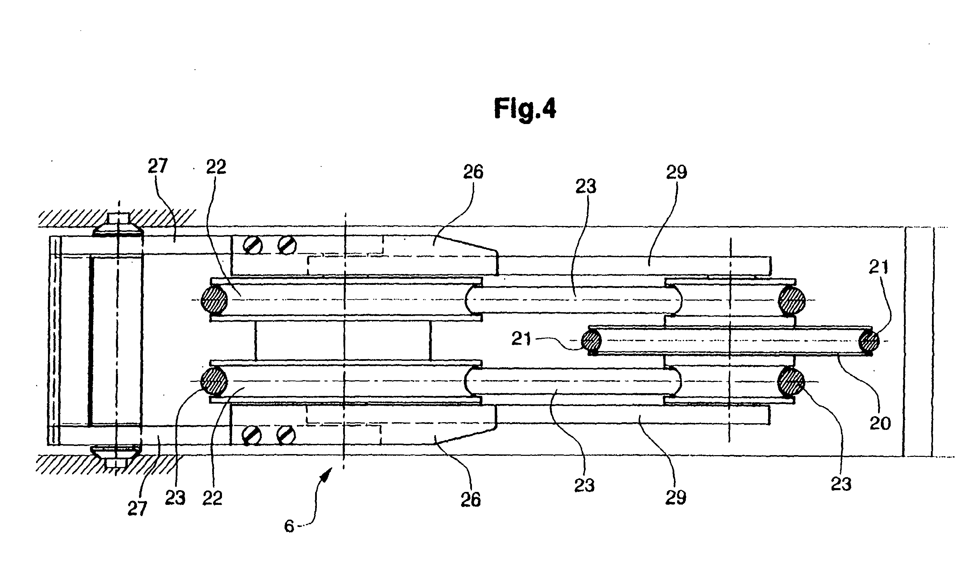

**Figuren 3 und 4** zeigen eine beispielhafte Ausführungsform eines Spannantriebs 6 für eine erfindungsgemässe Kraftübertragungs- oder Transportvorrichtung als Seitenansicht (Figur 3) und als Draufsicht von unten (Figur 4, Blickrichtung gemäss Pfeil IV in Figur 3). Der Spannantrieb 6 weist ein reibschlüssig mit den kraftübertragenden Elementen 2 wirkverbundenes Spannrad 20 mit einem elastisch deformierbaren Umfangsreifen 21 auf. Das Teilstück 5, auf dem die Reihe von kraftübertragenden Elementen 2 gespannt werden soll, liegt rechts vom Spannrad 20. Das Spannrad 20 wird über einen Riementrieb angetrieben von einem ebenfalls reibschlüssig mit den kraftübertragenden Elementen 2 wirkverbundenen Paar von Abtriebsrädem 22, deren elastisch deformierbare Umfangsreifen 23 gleichzeitig als Riemen zwischen den Abtriebsrädem 22 und dem Spannrad 20 dienen.

Der Riementrieb der als Koppelung zwischen Abtriebsrädem 22 und Spannrad 20 dient, ist für die gewünschte Übersetzung des Spannrades 20 gegenüber den Abtriebsrädern 22 ausgelegt, im vorliegenden Falle derart, dass die Antriebsgeschwindigkeit v_{S} grösser ist als die Abtriebsgeschwindigkeit v'. Diese entspricht beispielsweise der Geschwindigkeit eines weiteren, nicht dargestellten Antriebs, durch den die Elemente 2 von links gegen die Abtriebsräder 22 gestossen werden.

Im Spannantrieb gemäss Figur 3 ist dafür zu sorgen, dass die zwischen kraftübertragenden Elementen 2 und Abtriebsrädem 22 erzeugte Reibkraft grösser ist als die zwischen Elementen 2 und Spannrad 20 erzeugte Reibkraft (oder gegebenenfalls die im Riementrieb erzeugte Reibkraft). Dies wird beispielsweise realisiert durch entsprechende erste Federmittel 25, durch die die Abtriebsräder 22 gegen die Elemente 2 gedrückt werden, und zweite Federmittel 26, durch die das Spannrad 20 gegen die Elemente 2 gedrückt wird.

Die Abtriebsräder 22 sind frei drehbar gelagert in ersten Presshebeln 27, die ihrerseits schwenkbar in ortsfesten Stützen 28 gelagert sind und die durch die ersten Federmittel 25 gegen das Führungsmittel 1 bzw. gegen im Führungsmittel geführte, kraftübertragende Elemente 2 gepresst werden, das heisst, durch die die Abtriebsräder 22 gegen die kraftübertragenden Elemente 2 gepresst und dadurch angetrieben werden.

Das Spannrad 20 ist frei drehbar in zweiten Presshebeln 29 gelagert, welche zweiten Presshebel 29 via zweiter Federmittel 26 an den ersten Presshebeln 27 befestigt sind. Die zweiten Federmittel 26 pressen die zweiten Presshebel 29 und damit das Spannrad 20 gegen die kraftübertragenden Elemente 2 und sind derart ausgelegt, dass die resultierende Presskraft kleiner ist als die auf die Abtriebsräder 22 wirkende Presskraft.

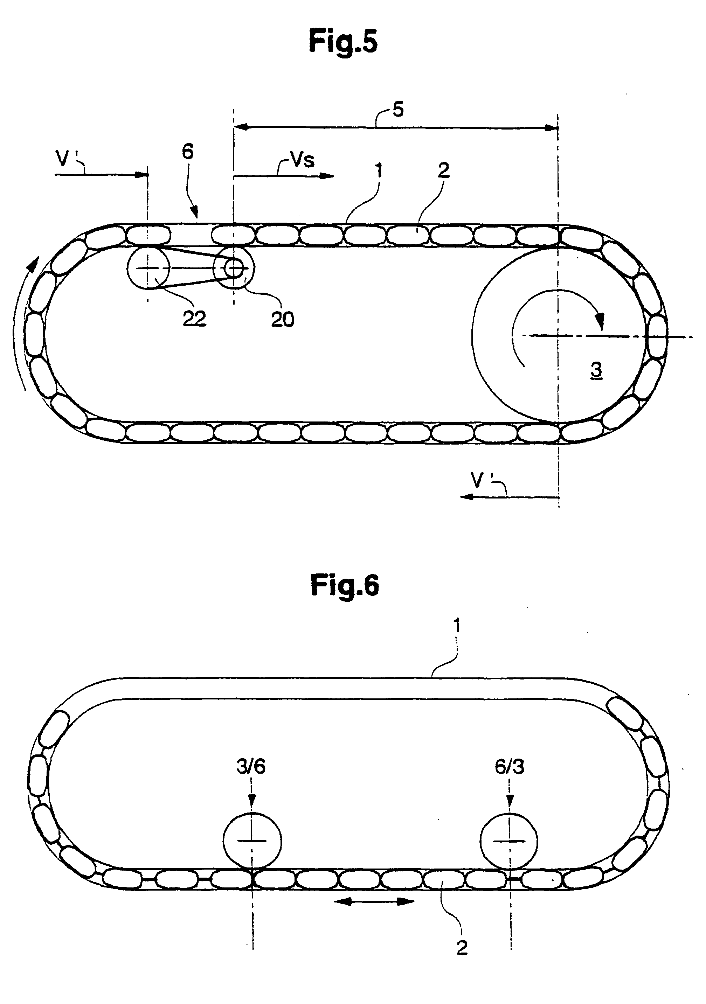

**Figur 5** zeigt eine beispielhafte Ausführungsform einer erfindungsgemässen Vorrichtung mit einem Spannantrieb gemäss Figuren 3 und 4. Die Führungsmittel 1 der Vorrichtung definieren eine in sich geschlossene Bahn in der beispielsweise nicht miteinander verbundene, kraftübertragende Elemente 2 durch einen Antrieb 3 im Uhrzeigersinn verschoben werden. Das Führungsmittel 1 ist etwas länger als die Reihe von kraftübertragenden Elementen 2. Um trotzdem auf dem grössten Teil der vorgegebenen Bahn durch eine Druckspannung auf die Reihe der unverbundenen, kraftübertragenden Elemente 2 definierte Abstände zu erstellen, weist die Vorrichtung zusätzlich einen Spannantrieb 6 auf, von der Art, wie er im Zusammenhang mit den Figuren 3 und 4 beschrieben wurde.

Der Spannantrieb 6 weist ein Abtriebsrad 22 und ein durch das Abtriebsrad getriebenes Spannrad 20 auf. Durch das Spannrad 20 wird zwischen Antrieb 3 und Spannrad 20 (Teilstück 5) eine Druckspannung auf die Reihe von Elementen 2 erzeugt. Wie in jedem System mit einem durch ein Kraftübertragungsmittel mit einem Antrieb 3 wirkverbundenen Abtrieb 22 entsteht auch auf diesem Teil der vorgegebenen Bahn eine Spannung, in diesem Falle ebenfalls eine Druckspannung, deren Grösse abhängig ist von der Bremsung der Elemente durch den Abtrieb 22. Das bedeutet aber nichts anderes, als dass auf der ganzen, in sich geschlossenen Bahn die Abstände zwischen den kraftübertragenden Elementen 2 die kleinst möglichen sind, bis auf die Strecke zwischen Abtriebsrad 22 und Spannrad 20 des Spannantriebs 6, wo die Abstände oder der Abstand dem gesamten Längs-Spiel des Kraftübertragungsmittels entspricht. Damit das System funktioniert, ist dafür zu sorgen, dass das Gesamtspiel in der Reihe von druckübertragenden Elementen 2 nicht grösser ist als die Distanz zwischen Abtriebsrad 22 und Spannrad 20.

Die in der Vorrichtung gemäss Figur 5 erzeugbaren Druckspannungen sind für das Teilstück 5 abhängig von der Reibkraft zwischen Spannrad 20 und kraftübertragenden Elementen 2 und für das Teilstück zwischen Antrieb 3 und Abtriebsrad 22 abhängig von der Bremsung der Elemente 2 durch das Abtriebsrad 22, beispielsweise sehr klein.

**Figur 6** zeigt eine erfindungsgemässe Vorrichtung mit einem Führungsmittel 1, das eine in sich geschlossene Bahn definiert, auf der in beiden Richtungen eine nicht endlose Kette von miteinander verbundenen, kraftübertragenden Elementen 2 verschiebbar ist. Die Vorrichtung weist ferner zwei voneinander beabstandete Antriebe 3/6 und 6/3 auf, von denen immer der eine als Antrieb 3 im wesentlichen ohne Schlupf und der andere als Spannantrieb 6 über eine Reibungskupplung mit den Elementen 2 wirkverbunden sind. Durch entsprechende Wahl der relativen Geschwindigkeiten der beiden Antriebe 3/6 und 6/3 wird im Bahnbereich zwischen den Antrieben eine Zugspannung oder eine Druckspannung in der Kette von kraftübertragenden Elementen erzeugt und dadurch der grösstmögliche oder der kleinstmögliche Abstand zwischen den Kettengliedern erstellt.

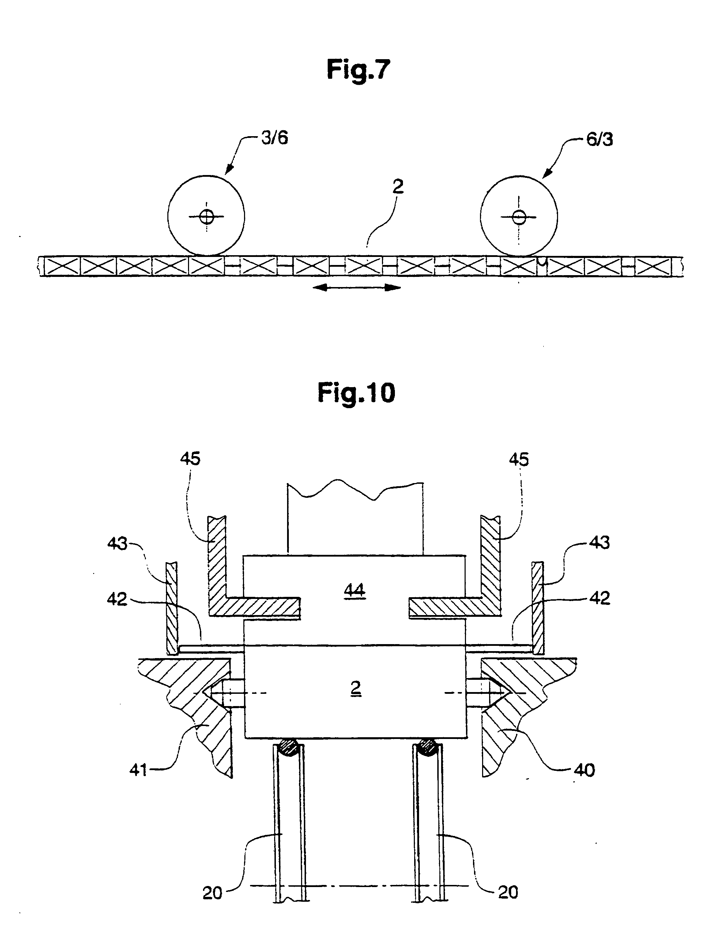

Was in der Figur 6 an einer in sich geschlossenen Bahn gezeigt wird, ist selbstverständlich auch mit einer nicht in sich geschlossenen Bahn möglich, wie dies in der **Figur 7** mit einer zwischen den Antrieben 6/3 und 3/6 gestreckten Kette von kraftübertragenden Elementen 2 dargestellt ist.

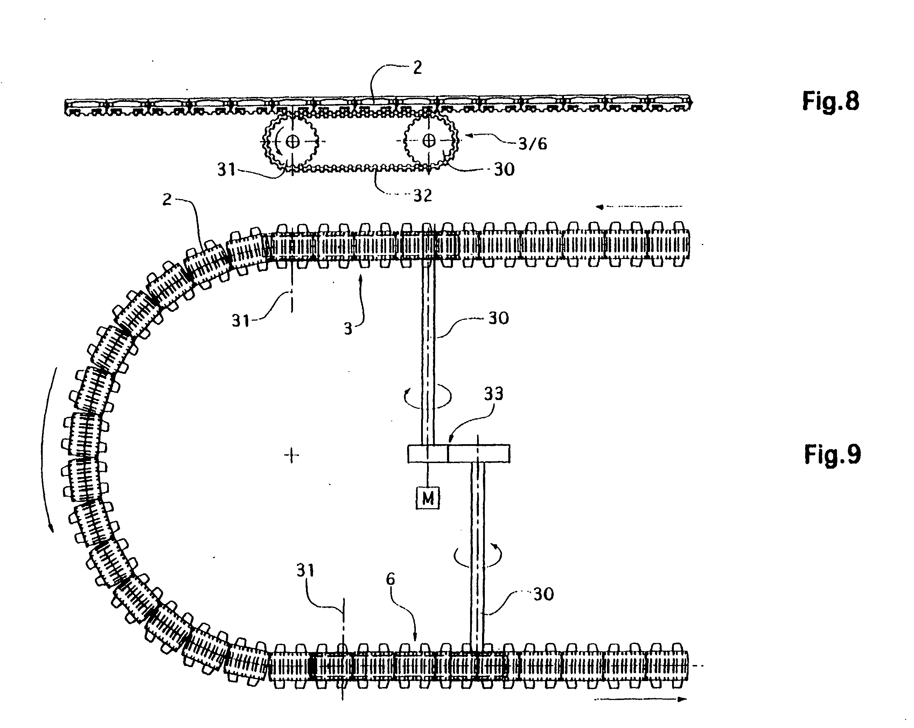

**Figuren 8 und 9** zeigen eine weitere, beispielhafte Ausführungsform der erfindungsgemässen Vorrichtung. Die Vorrichtung ist in der Figur 9 als Draufsicht und in der Figur 8 teilweise als Seitenansicht dargestellt. Die kraftübertragenden Elemente 2 sind nicht miteinander verbunden und sind in einer Reihe einander stossend zwischen nicht dargestellten Schienen verschiebbar. Die Vorrichtung weist zwei im wesentlichen gleiche Antriebe 3 und 6 auf, die beide einen über zwei Zahnräder 30 und 31 (in der Figur 9 sind die entsprechenden Achsen bezeichnet) laufenden Zahnriemen 32 aufweisen, der formschlüssig in entsprechende Zahnungen der Elemente 2 eingreift. Das Zahnrad 30 des in der Figur 9 oben dargestellten Antriebes 3 ist im wesentlichen schlupffrei mit einem Motor M wirkverbunden. Das Zahnrad 30 des in der Figur 9 unten dargestellten Spannantriebes 6 ist via Reibräderpaar 33 mit der angetriebenen Welle des Antriebs 3 verbunden wobei das Reibräderpaar 33 derart dimensioniert ist, dass es eine Reibungskupplung und eine Untersetzung darstellt.

In der dargestellten Anordnung werden die Elemente 2 durch den Antrieb 3 gegen den Spannantrieb 6 bewegt und vom Spannantrieb 6 derart gebremst, dass sich in der Reihe von kraftübertragenden Elementen 2 zwischen Antrieb 3 und Spannantrieb 6 eine Druckspannung bildet, durch die die Abstände zwischen den Elementen 2 auf einem Minimum gehalten werden.

**Figur 10** zeigt zur Illustration einer Anwendung von zwischen kraftübertragenden Elementen eingestellten, definierten Abständen ein derartiges Element 2 in einem Schnitt quer durch die vorgegebene Bahn. Diese vorgegebene Bahn wird definiert durch zwei Schienen 40 und 41 (Führungsmittel), in denen das Element 2 gleitet oder rollt. Unterhalb des Elementes 2 ist ein Paar von Spannrädern 20, die wie im Zusammenhang mit den Figuren 1 bis 4 beschrieben durch Reibschluss mit dem Element 2 wirkverbunden sind.

Mindestens die obere Fläche des Elementes 2 ist magnetisierbar, beispielsweise über die Kontakte 42, die im dargestellten Bereich der Bahn an Schienen 43 entlang gleiten. Oberhalb des Elementes 2 ist ein Transportmittel 44 positioniert, das seinerseits in einer Reihe von gleichen Transportmitteln auf Schienen 45 verschiebbar ist und das mit dem kraftübertragenden Element 2 magnetisch koppelbar ist.

In einer Kopplungsstelle, in der wie in der Figur 10 dargestellt, kraftübertragende Elemente 2 mit Transportmitteln 44 gekoppelt und als Paare weiter auf der vorgegebenen Bahn verschoben werden, kann es wichtig sein, dass die Elemente 2 einen genau definierten Abstand zwischen einander aufweisen.

Nur so kann beispielsweise über eine längere Zeit eine genaue Synchronisation zwischen Transportmitteln 44 und Elementen 2 garantiert werden.

Es ist auch vorstellbar, dass eine Druckspannung auf die Reihe von kraftübertragenden Elementen 2 erzeugt wird, um ihre Oberflächen, an die die Transportmittel 44 zu koppeln sind, zu einer absolut unterbruchslosen Koppelfläche zu machen, derart, dass Transportmittel 44, die in der Richtung der vorgegebenen Bahn (in der Figur 10 senkrecht zur Papierebene) eine verglichen mit der Ausdehneung der Elemente 2 sehr kleine Ausdehnung haben, trotzdem ohne jede Synchronisation mit den Elementen 2 und trotzdem sicher an diese ankoppelkbar sind.

Die vorgegebene Bahn der erfindungsgemässen Kraftübertragungs- oder Transportvorrichtung kann beliebig im Raum verlaufen und sie kann auch verzweigt sein. Ferner kann sie an verschiedenen Stellen gleiche oder verschiedene Spannantriebe aufweisen.

## Patentansprüche

1. Kraftübertragungs- oder Transportvorrichtung, welche Vorrichtung eine Reihe von kraftübertragenden Elementen (2), Führungsmittel (1) zur Führung der kraftübertragenden Elemente (2) auf einer vorgegebenen Bahn und mindestens einen Antrieb aufweist, wobei der mindestens eine Antrieb an einer Stelle der vorgegebenen Bahn kraftübertragende Elemente (2) aktiv auf der Bahn bewegt und wobei durch den Antrieb bewegte Elemente (2) weitere Elemente (2) ziehend oder schiebend bewegen, **dadurch gekennzeichnet, dass** zur Erzeugung einer Spannung auf die Reihe von kraftübertragenden Elementen (2) über ein Teilstück (5) der vorgegebenen Bahn am einen Ende des Teilstücks (5) ein über eine Reibungskupplung auf die Elemente (2) wirkender Spannantrieb (6) und am anderen Ende des Teilstücks (5) ein im wesentlichen schlupffrei auf die Elemente (2) wirkender, weiterer Antrieb (3) oder intermittierender Stopp (9) angeordnet ist, wobei die Antriebsgeschwindigkeit (v_{S}) des Spannantriebs (6) von der Antriebsgeschwindigkeit (v) des weiteren Antriebs (3) oder Stopps (9) verschieden ist.

2. Kraftübertragungs- oder Transportvorrichtung nach Anspruch 1, **dadurch gekennzeichnet, dass** die kraftübertragenden Elemente (2) miteinander verbunden sind und dass der Spannantrieb (6) derart ausgestaltet und positioniert ist, dass er auf dem Teilstück (5) der vorgegebenen Bahn eine Zugspannung oder eine Druckspannung auf die Reihe von Elementen (2) erzeugt.

3. Kraftübertragungs- oder Transportvorrichtung nach Anspruch 1, **dadurch gekennzeichnet, dass** die kraftübertragenden Elemente (2) unverbunden sind und dass der Spannantrieb (6) derart ausgestaltet und positioniert ist, dass er auf dem Teilstück (5) der vorgegebenen Bahn eine Druckspannung auf die Reihe von Elementen (2) erzeugt.

4. Kraftübertragungs- oder Transportvorrichtung nach einem der Ansprüche 1 bis 3, **dadurch gekennzeichnet, dass** der Spannantrieb (6) reibschlüssig mit kraftübertragenden Elementen (2) wirkverbindbar ist.

5. Kraftübertragungs- oder Transportvorrichtung nach Anspruch 4, **dadurch gekennzeichnet, dass** der Spannantrieb (6) ein gegen kraftübertragende Elemente (2) pressbares Spannrad (7, 20) aufweist.

6. Kraftübertragungs- oder Transportvorrichtung nach Anspruch 5, **dadurch gekennzeichnet, dass** das Spannrad (7, 20) einen elastisch deformierbaren Umfangsring (8, 21) aufweist.

7. Kraftübertragungs- oder Transportvorrichtung nach einem der Ansprüche 1 bis 3, **dadurch gekennzeichnet, dass** ein Element (11, 30) des Spannantriebs (6) formschlüssig mit kraftübertragenden Elementen (2) wirkverbindbar ist und dass zwischen zwei Elementen des Spannantriebs (6) eine Reibungskupplung (12, 23, 33) vorgesehen ist.

8. Kraftübertragungs- oder Transportvorrichtung nach Anspruch 7, **dadurch gekennzeichnet, dass** die Reibungskupplung ein Riementrieb (12, 23) oder ein Reibradpaar (33) ist.

9. Kraftübertragungs- oder Transportvorrichtung nach einem der Ansprüche 1 bis 8, **dadurch gekennzeichnet, dass** eine Kupplung zwischen dem Spannantrieb (6) und dem weiteren Antrieb (3) vorgesehen ist.

10. Kraftübertragung- oder Transportvorrichtung nach einem der Ansprüche 1 bis 8, **dadurch gekennzeichnet, dass** der Spannantrieb (6) einen durch kraftübertragende Elemente (2) angetriebenen Abtrieb (22/23) aufweist.

11. Kraftübertragungs- oder Transportvorrichtung nach Anspruch 10, **dadurch gekennzeichnet, dass** der Abtrieb ein Abtriebsrad (22) mit einem elastisch deformierbaren Umfangsring (23) ist und dass der Umfangsring auch als Riemen zur Kupplung zu einem Spannrad (20) dient.

12. Kraftübertragungs- oder Transportvorrichtung nach Anspruch 10 oder 11, **dadurch gekennzeichnet, dass** das Abtriebsrad (22) frei drehbar in ersten Presshebeln (27) und das Spannrad (20) frei drehbar in zweiten Presshebeln (29) gelagert ist, wobei die ersten Presshebel (27) mit ersten Federmitteln (25) gegen die kraftübertragenden Elemente (2) gepresst werden und die zweiten Presshebel (29) über zweite Federmittel (26) an den ersten Presshebeln (27) befestigt sind.

## Claims

1. Force transmission or transport device comprising a line of force transmitting elements (2), guide means (1) for guiding the force transmitting elements (2) along a predetermined course and at least one drive, wherein the at least one drive displaces force transmitting elements (2) actively in one location of the predetermined course and wherein force transmitting elements (2) displaced by the drive displace further elements by pulling or by pushing, **characterized in that** for tensioning the line of force transmitting elements (2) in a section (5) of the predetermined course, a tensing drive (6) acting on the elements (2) via a friction clutch is provided on one end of the section (5) and a further drive acting on the elements (2) substantially without slippage or an intermitting stop (9) is provided on the other end of the section (5), wherein the driving speed (v_{S}) of the tensing drive (6) is different from the driving speed (v) of the further drive (3) or stop (9).

2. Force transmission or transport device according to claim 1, **characterized in that** the force transmitting elements (2) are connected to each other and that the tensing drive (6) is designed and positioned such that it tensions the line of elements (2) in the section (5) of the predetermined course with a tractive or with a compressive load.

3. Force transmission or transport device according to claim 1, **characterized in that** the force transmitting elements (2) are unconnected and that the tensing drive (6) is designed and positioned such that it tensions the line of elements (2) in the section (5) of the predetermined course with a compressive load.

4. Force transmission or transport device according to one of claims 1 to 3, **characterized in that** the tensing drive (6) is functionally coupled to the force transmitting elements (2) by friction.

5. Force transmission or transport device according to claim 4, **characterized in that** the tensing drive (6) comprises a tensing wheel (7, 20) which is pressed against the force transmitting means (2).

6. Force transmission or transport device according to claim 5, **characterized in that** the tensing wheel (7, 20) comprises an elastically deformable circumferential ring (8, 21).

7. Force transmission or transport device according to claims 1 to 3, **characterized in that** an element (11, 30) of the tensing drive (6) is functionally coupled with the force transmitting elements (2) by positive engagement and that a friction clutch (12, 23, 33) is provided between two elements of the tensing drive (6).

8. Force transmission or transport device according to claim 7, **characterized in that** the friction clutch consists of a belt drive (12, 23) or of a pair of friction wheels (33).

9. Force transmission or transport device according to one of claims 1 to 8, **characterized in that** a clutch is provided between the tensing drive (6) and the further drive (3).

10. Force transmission or transport device according to one of claims 1 to 8, **characterized in that** the tensing drive (6) comprises a driven element (22/23) being driven by the force transmitting elements (2).

11. Force transmission or transport device according to claim 10, **characterized in that** the driven element is a driven wheel (22) with an elastically deformable circumferential ring (23) the ring extending as a coupling means between the driven wheel (22) and a tensing wheel (20).

12. Force transmission or transport device according to claim 10 or 11, **characterized in that** the driven wheel (22) is arranged freely rotating on first compression levers (27) and the tensing wheel (20) is arranged freely rotating on second compression levers (29), wherein the first compression levers (27) are urged towards the force transmitting elements (2) by first spring means and the second compression levers (29) are fixed to the first compression levers (27) via second spring means (26).

## Revendications

1. Dispositif de transmission de force ou de transport, lequel dispositif présente une série d'éléments (2) de transmission de force, des moyens de guidage (1) pour guider les éléments (2) de transmission de force sur un parcours prédéterminé et au moins un entraînement, l'entraînement au moins présent déplaçant activement sur le parcours des éléments (2) de transmission de force situés en un emplacement du parcours prédéterminé, les éléments (2) déplacés par l'entraînement déplaçant d'autres éléments (2) par traction ou par poussée, **caractérisé en ce que** pour créer une tension dans la série d'éléments (2) de transmission de force sur une partie (5) du parcours prédéterminé, un entraînement de serrage (6) qui agit sur les éléments (2) par l'intermédiaire d'un accouplement à frottement est disposé à une extrémité de la partie (5) et un autre entraînement (3) ou un arrêt intermittent (9) qui agit essentiellement sans glissement sur les éléments (2) est disposé à l'autre extrémité de la partie (5), la vitesse d'entraînement (Vₛ) de l'entraînement de serrage (6) étant différente de la vitesse d'entraînement (v) de l'autre entraînement (3) ou de l'arrêt (9).

2. Dispositif de transmission de force ou de transport selon la revendication 1, **caractérisé en ce que** les éléments (2) de transmission de force sont reliés les uns aux autres et **en ce que** l'entraînement de serrage (6) est configuré et positionné de telle sorte qu'il crée dans la partie (5) du parcours prédéterminé une contrainte de traction ou une contrainte de poussée sur la série d'éléments (2).

3. Dispositif de transmission de force ou de transport selon la revendication 1, **caractérisé en ce que** les éléments (2) de transmission de force ne sont pas reliés entre eux et **en ce que** l'entraînement de serrage (6) est configuré et positionné de telle sorte qu'il crée dans la partie (5) du parcours prédéterminé une contrainte de poussée sur la série d'éléments (2).

4. Dispositif de transmission de force ou de transport selon l'une des revendications 1 à 3, **caractérisé en ce que** l'entraînement de serrage (6) peut coopérer par frottement avec les éléments (2) de transmission de force.

5. Dispositif de transmission de force ou de transport selon la revendication 4, **caractérisé en ce que** l'entraînement de serrage (6) présente une roue de serrage (7, 20), qui peut être repoussée contre des éléments (2) de transmission de force.

6. Dispositif de transmission de force ou de transport selon la revendication 5, **caractérisé en ce que** la roue de serrage (7, 20) présente une bague périphérique (8, 21) élastiquement déformable.

7. Dispositif de transmission de force ou de transport selon l'une des revendications 1 à 3, **caractérisé en ce qu'**un élément (11, 30) de l'entraînement de serrage (6) peut coopérer en correspondance géométrique avec des éléments (2) de transmission de force et **en ce qu'**un accouplement par frottement (12, 23, 33) est prévu entre deux éléments de l'entraînement de serrage (6).

8. Dispositif de transmission de force ou de transport selon la revendication 7, **caractérisé en ce que** l'accouplement par frottement est un entraînement à courroie (12, 23) ou une paire de roues de frottement (33).

9. Dispositif de transmission de force ou de transport selon l'une des revendications 1 à 8, **caractérisé en ce qu'**un accouplement est prévu entre l'entraînement de serrage (6) et l'autre entraînement (3).

10. Dispositif de transmission de force ou de transport selon l'une des revendications 1 à 8, **caractérisé en ce que** l'entraînement de serrage (6) présente une transmission secondaire (22/23) entraînée par des éléments (2) de transmission de force.

11. Dispositif de transmission de force ou de transport selon la revendication 10, **caractérisé en ce que** la transmission secondaire est une roue entraînée (22) dotée d'une bague périphérique (23) élastiquement déformable et **en ce que** la bague périphérique sert également de courroie d'accouplement à une roue de serrage (20).

12. Dispositif de transmission de force ou de transport selon la revendication 10 ou 11, **caractérisé en ce que** la roue entraînée (22) est montée à rotation libre dans des premiers leviers de poussée (27) et **en ce que** la roue de serrage (20) est montée à rotation libre dans des deuxièmes leviers de poussée (29), les premiers leviers de poussée (27) étant repoussés contre les éléments (2) de transmission de force par des premiers moyens élastiques (25) et les deuxièmes leviers de poussée (29) étant fixés sur les premiers leviers de poussée (27) par des deuxièmes moyens élastiques (26).
